Europäisches Patentamt

European Patent Office

Office européen des brevets

(19)

(11) Veröffentlichungsnummer: **0 348 816 B1**

(12) **EUROPÄISCHE PATENTSCHRIFT**

(45) Veröffentlichungstag der Patentschrift: **23.12.92**

(21) Anmeldenummer: **89111336.7**

(22) Anmeldetag: **22.06.89**

(51) Int. Cl.⁵: **G01D 5/36**, G01B 11/26, G01D 5/26, G01D 5/34

(54) **Digitaler Lagesignalgeber.**

(30) Priorität: **30.06.88 DE 3822007**

(43) Veröffentlichungstag der Anmeldung: **03.01.90 Patentblatt 90/01**

(45) Bekanntmachung des Hinweises auf die Patenterteilung: **23.12.92 Patentblatt 92/52**

(84) Benannte Vertragsstaaten: **AT BE CH DE ES FR GB GR IT LI LU NL SE**

(56) Entgegenhaltungen:
EP-A- 0 030 477   EP-A- 0 194 611
EP-A- 0 262 349   DE-A- 3 124 838
FR-A- 2 592 960   GB-A- 2 091 423
US-A- 3 541 521   US-A- 4 731 530

(73) Patentinhaber: **Bodenseewerk Gerätetechnik GmbH**
**Alte Nussdorfer Strasse 15 Postfach 1120**
**W-7770 Überlingen/Bodensee(DE)**

(72) Erfinder: **Langner, Klaus**
**Alte Dorfstrasse 61**
**W-7770 Überlingen 12(DE)**
Erfinder: **Froning, Karl,Edilbert Alexander**
**Am Fohrenbühl 12**
**W-7777 Salem(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg(DE)**

## Beschreibung

### Technisches Gebiet

Die Erfindung betrifft eine Steuerknüppelanordnung zum Führen eines Luftfahrzeuges mit einem Steuerknüppel, der in zwei Richtungen auslenkbar ist, bei dem

(a) der Steuerknüppel mit einer Welle verbunden ist, die in einem Rahmen drehbar gelagert ist,

(b) der Rahmen zur kardanischen Lagerung des Steuerknüppels seinerseits mit Lagerzapfen in gestellfesten Lagern gelagert ist,

(c) eine erste, mit einer Codierung versehene drehbare Scheibe auf der Welle sitzt,

(d) eine zweite, mit einer Codierung versehene drehbare Scheibe auf einem der Lagerzapfen sitzt, und

(e) den Scheiben Mittel zum Abtasten der Codierungen zugeordnet sind.

### Zugrundeliegender Stand der Technik

Aus der GB-A-2 091 423 ist eine Steuerknüppelanordnung mit den oben zum technischen Gebiet genannten Merkmalen bekannt. Auf den Scheiben sind Permanentmagnete angeordnet, die als Codierungen dienen und in deren Bereich gegenüber den drehbaren Scheiben feststehende Hall-Sensoren angeordnet sind, die zum Abtasten der Codierungen dienen. Die Fortleitung der in den Hall-Sensoren erzeugten elektrischen Signale muss über elektrische Leitungen erfolgen.

Durch die DE-A-3 124 838 ist eine Steuereinrichtung mit einem zweidimensional verstellbaren Steuerknüppel bekannt, bei welcher durch den Steuerknüppel zwei verschiedene Funktionen gesteuert werden können. Dabei ist der Steuerknüppel in einem Rendelkugellager schwenkbar gelagert. Als digitale Lagesignalgeber dienen zwei zueinander senkrecht verlaufende Schlitzmuster in einer Codeplatine. Die Codeplatine ist gegenüber einer Führungsplatine in Richtung des einen Schlitzmusters geradlinig verschiebbar. Die Führungsplatine ist ihrerseits gegenüber einer gehäusefesten Diodenplatine in Richtung des anderen Schlitzmusters geradlinig verschiebbar. Die Schlitzmuster sind durch Lichtschranken abtastbar, welche von Leuchtdioden und Phototransistoren gebildet sind. Die Leuchtdioden und Phototransistoren sitzen auf Platinen, die parallel zur Codeplatine angeordnet sind. Die Codeplatine ist durch den Steuerknüppel verstellbar, der mit seinem inneren Ende in einem Durchbruch der Codeplatine eingreift.

Durch die FR-A-2 592 960 sind als Stand der Technik Weggeber beschrieben, welche optische Fasern benutzen, um Lichtimpulse, die beispielsweise durch Laserstrahlen erzeugt werden, zu übertragen. Diese Lichtimpulse werden zurückgeworfen von einer Scheibe mit kreisförmigen Spuren, die in übereinstimmende, abwechselnd reflektierende und nicht-reflektierende Sektoren unterteilt sind. Die Anzahl dieser Sektoren ist von Spur zu Spur verschieden. Die Weggeber beobachten den Rhythmus der so zurückgeworfenen Impulse.

Gegenstand der FR-A-2 252 960 ist ein Sensor der anzeigt, ob ein Ventil o. dgl. einen von zwei definierten Zuständen, z.B. voll geöffnet oder voll geschlossen, eingenommen hat. Zu diesem Zweck ist mit dem Ventil eine Scheibe mit zwei Spuren verbunden. Jede dieser Spuren ist reflektierend bis auf jeweils eine nicht-reflektierende Zone. Diese nicht-reflektierende Zone liegt bei der einen Spur an dem einen und bei der anderen Spur am entgegengesetzten Ende der Spur. Von einer gepulsten Lichtquelle werden Lichtimpulse über ein Y-Stück und zwei Lichtleiter zu den beiden Spuren geleitet und von diesen reflektiert. Die reflektierenden Lichtimpulse werden über die Lichtleiter auf einen Detektor geleitet. Die beiden Lichtleiter haben unterschiedliche optische Weglängen, so dass die reflektierten Lichtimpulse zeitlich versetzt auf den Detektor fallen. Aus dem erhaltenen Impulsmuster kann auf den Schaltzustand des Ventils geschlossen werden.

Aus der US-A-3 541 521 ist es bekannt, bei einer mechanischen Vorrichtung zum Steuern eines Cursors auf dem Bildschirm einer Kathodenstrahlröhre zwei mit ihren Achsen gegeneinander versetzte Scheiben zu verwenden, die durch die Bewegungen einer Rollkugel angetrieben werden. Diese Scheiben sind mit optischen Codierungen in Form von Löchern versehen, die durch im Bereich der Scheiben angeordnete Lichtschranken abgetastet werden.

### Offenbarung der Erfindung

Der Erfindung liegt die Aufgabe zugrunde, eine Steuerknüppelanordnung der eingangs genannten Art so auszubilden, dass sie bei einfachem Aufbau eine grosse Messgenauigkeit und ein hohes Mass an Zuverlässigkeit auch unter ungünstigen Bedingungen gewährleistet.

Erfindungsgemäss wird diese Aufgabe gelöst durch eine Steuerknüppelanordnung zum Führen eines Luftfahrzeuges mit einem Steuerknüppel, der in zwei Richtungen auslenkbar ist, bei der

(a) der Steuerknüppel mit einer Welle verbunden ist, die in einem Rahmen drehbar gelagert ist,

(b) der Rahmen zur kardanischen Lagerung des Steuerknüppels seinerseits mit Lagerzapfen in gestellfesten Lagern gelagert ist,

(c) eine erste, mit einer Codierung versehene drehbare Scheibe auf der Welle ist,

(d) eine zweite, mit einer Codierung versehene drehbare Scheibe auf einem der Lagerzapfen sitzt,

(e) den Scheiben Mittel zum Abtasten der Codierungen zugeordnet sind,

die dadurch gekennzeichnet ist, dass

(f) die Scheiben mit optisch abtastbaren Strichmustern oder Codierungen versehen sind,

(g) ein Lichtbündel von einer ersten Lichtquelle von ersten Lichtzuleitermitteln, die an dem Rahmen gehaltert sind, bis dicht an die erste Scheibe herangeführt ist,

(h) erste Lichtableitermittel, die das durch das Strichmuster oder die Codierung der ersten Scheibe beeinflusste Licht aufnehmen und zu Detektoren führen,

(i) ein Lichtbündel, das von einer zweiten Lichtquelle von zweiten Lichtzuleitermitteln, die an dem Rahmen gehaltert sind, bis dicht an die zweite Scheibe herangeführt ist,

(k) zweite Lichtableitermittel, die das durch das Strichmuster oder die Codierung der zweiten Scheibe beeinflusste Licht aufnehmen und zu Detektoren führen,

(l) wobei die Lichtquellen und die Detektoren entfernt von den Scheiben und dem Rahmen angeordnet sind.

Der Steuerknüppel ist somit kardanisch gelagert. Die Auslenkung zwischen Steuerknüppel und Rahmen und zwischen Rahmen und Struktur werden jeweils durch Abtastung eines Lagesignalgebers in Form einer mit einem Muster versehenen Scheibe erfasst, die einem mit einem äquidistanten Strichmuster versehene Scheibe oder eine Codierscheibe mit mehreren Spuren sein kann. Lichtquelle und Detektor sitzen jedoch nicht unmittelbar an dem Lagesignalgeber. Am Lagesignalgeber sind nur passive Glieder in Form von Lichtleitern vorgesehen. Das Signal erscheint als optisches Signal, das von einem Lichtleiter fernübertragen wird. Auf diese Weise werden elektrische Signalleitungen vermieden, welche Störungen durch elektromagnetische Felder unterworfen sein können. Die Lichtleiter sind im Vergleich zu einem elektrischen Kabel leicht. Die Gewichtersparnis kann recht erheblich sein, insbesondere wenn mehrere Signalleitungen vorgesehen und/oder Signalleitungen redundant vorgesehen werden und wenn für die Signalleitung eine Abschirmung erforderlich ist. Der Aufbau der Anordnung ist sehr einfach. Es können sehr leicht mehrere benachbarte Punkte des Gebergliedes abgetastet werden.

Ausgestaltungen der Erfindung sind Gegenstand der abhängigen Ansprüche.

Einige Ausführungsbeispiele der Erfindung sind nachstehend unter Bezug auf die zugehörigen Zeichnungen näher erläutert.

## Kurze Beschreibung der Zeichnungen

Fig. 1     ist eine schematisch - perspektivische Darstellung und zeigt, wie die Bewegung eines Steuerknüppels in einer Richtung mittels eines inkrementalen Winkelgebers abgegriffen wird, der im Durchlicht arbeitet.

Fig. 2     ist eine schematisch - perspektivische Darstellung ähnlich Fig. 1 mit einer redundanten Abtastung einer Strichscheibe eines inkrementalen Weggebers, wobei ebenfalls im Durchlicht gearbeitet wird.

Fig. 3     ist eine schematisch - perspektivische Darstellung ähnlich Fig. 2 mit einer redundanten Abtastung einer Strichscheibe eines inkrementalen Weggebers, wobei mit Reflexion an der Strichscheibe gearbeitet wird.

Fig.4A     ist eine schematisch - perspektivische Darstellung und zeigt die Abtastung beispielsweise einer 3-Bit-Codierscheibe durch mehrere Lichtleiter.

Fig.4B     ist eine Draufsicht auf beispielsweise eine 8-Bit-Codierscheibe, die wie die 3-Bit-Codierscheibe nach Fig. 4A abtastbar ist;

Fig.5     ist eine schematisch - perspektivische Darstellung und zeigt einen kardanisch gelagerten Steuerknüppel, dessen Bewegungen in zwei Richtungen durch je einen inkrementalen Winkelgeber mit Lichtleitern abgetastet wird.

Fig.6     ist eine schematisch - perspektivische Darstellung und zeigt einen inkrementalen Winkelgeber, bei welchem eine Strichscheibe durch mehrere nach Art eines Nonius angeordnete Lichtleiter abgetastet wird.

## Bevorzugte Ausführungen der Erfindung

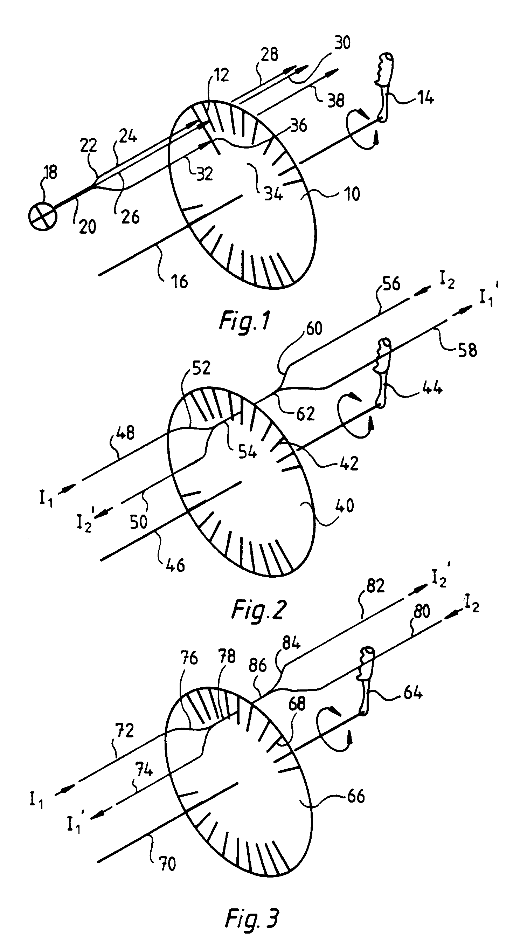

In Fig.1 ist mit 10 eine Strichscheibe bezeichnet. Die Strichscheibe 10 hat an ihrem Rand eine Spur 12 von in gleichen Abständen angeordneten, radialen Strichen. Die Striche sind lichtundurchlässig. Die Strichscheibe 10 selbst ist lichtdurchlässig. Die Strichscheibe 10 ist durch einen Steuerknüppel 14, wie durch die Pfeile angedeutet, um eine Achse 16 verdrehbar. Von einer Lichtquelle 18 wird ein Lichtbündel auf einen Lichtleiter 20 in Form einer lichtleitenden Faser geleitet. Durch ein Verteilerstück 22 wird dieses Lichtbündel auf zwei Lichtleiter 24 und 26 verteilt. Die Lichtleiter 24 und 26 sind bis dicht an die Strichscheibe 10 herangeführt.

Bezeichnet man den Abstand benachbarter Striche des Spur 12 als Periode, dann sind die Stirnflächen der Lichtleiter 24 und 26 um eine Viertelperiode in Umfangsrichtung gegeneinander versetzt. Hinter der Strichscheibe 10 sind fluchtend mit den Lichtleitern 24 und 26 zwei Lichtleiter 28 bzw. 30 angeordnet. Die Lichtleiter 28 und 30 nehmen das Licht auf, das aus den Lichtleitern 24 bzw. 26 durch die Strichscheibe 10 hindurchtritt. Die Lichtleiter 24 und 26 übertragen somit das durch die Unterbrechung des Lichtbündels durch die Striche der Spur 12 erhaltene optische Signal zu einer (nicht dargestellten) Signalverarbeitungseinrichtung.

Ein weiterer Lichtleiter 32 zweigt über das Verteilerstück 22 von dem Lichtleiter 20 ab und ist zu einer radial einwärts von der Spur 12 angeordneten Spur 34 geführt. In der Spur 34 ist eine Referenzmarke 36 angeordnet. Fluchtend mit dem Lichtleiter 32 sitzt auf der gegenüberliegenden Seite der Strichscheibe 10 ein Lichtleiter 38, der ebenfalls zu der Signalverarbeitungseinrichtung geführt ist.

Die Signalverarbeitungseinrichtung enthält in bekannter und daher hier nicht dargestellter Weise photoelektrische Detektoren sowie eine Schaltung, welche aus der Aufeinanderfolge der Impulse in den Lichtleitern 28 und 30 die Drehrichtung der Strichscheibe 10 zu bestimmen gestattet sowie einen Zähler, in welchen die Impulse je nach Drehrichtung aufwärts oder abwärts eingezählt werden. Durch einen Referenzimpuls von der Referenzmarke 36 wird der Zähler auf null zurückgestellt. Auf diese Weise gibt der Zählerstand in digitaler Form die Lage der Strichscheibe 10 wieder und damit die Stellung des Steuerknüppels 14. Dieser Zählerstand kann dann als Steuersignal dienen.

Sowohl die Beleuchtung als auch die Signalübertragung erfolgt hier über Lichtleiter. An dem Steuerknüppel 14 und der Strichscheibe 10 sind keinerlei elektrische oder elektro - optische Bauteile vorgesehen, so daß keine elektrischen Leitungen erforderlich sind.

In vielen Fällen ist es aus Sicherheitsgründen erforderlich, Signale redundant zu erzeugen. Fig.2 zeigt eine Anordnung, bei welcher dies erreicht wird. Der Aufbau der Anordnung ist ähnlich dem von Fig.1

Mit 40 ist eine Strichscheibe bezeichnet. Die Strichscheibe 40 ist ebenfalls durchsichtig und weist eine Spur 42 von äquidistanten, undurchsichtigen, radialen Strichen auf. Die Strichscheibe 40 ist von einem Steuerknüppel 44 um eine Achse 46 verdrehbar.

Ein erster Lichtleiter 48 ist zu einer (nicht dargestellten) Lichtquelle geführt und leitet ein Lichtbündel mit der Intensität $I_1$. Ein zweiter Lichtleiter 50 ist auf der gleichen Seite der Strichscheibe 40 angeordnet wie der Lichtleiter 48. Der Lichtleiter 48 und der Lichtleiter 50 sind über ein Y-Stück 52 mit einem gemeinsamen Lichtleiter 54 verbunden, der dicht vor der Strichscheibe 40 im Bereich der Spur 42 endet.

Ein dritter Lichtleiter 56 auf der entgegengesetzten Seite der Strichscheibe 40 führt zu einer (ebenfalls nicht dargestellten) Lichtquelle und leitet ein Lichtbündel mit der Intensität $I_2$. Ein vierter Lichtleiter 58 ist auf der gleichen, in Fig.2 hinteren Seite der Strichscheibe 40 angeordnet wie der Lichtleiter 56. Der Lichtleiter 56 und der Lichtleiter 58 sind über ein Y-Stück 60 mit einem gemeinsamen Lichtleiter 62 verbunden. Der Lichtleiter 62 fluchtet mit dem Lichtleiter 54 und endet auf der hinteren Seite ebenfalls dicht vor der Strichscheibe 40.

Licht aus dem Lichtleiter 48 wird in den Lichtleiter 62 geleitet und dann teilweise mit einer Intensität $I_1'$ in den Lichtleiter 58. Das Licht wird durch die Striche der Spur 42 moduliert. Diese Modulation wird als erstes Signal über den Lichtleiter 58 zu einer Signalverarbeitungseinrichtung übertragen. In ähnlicher Weise wird Licht aus dem Lichtleiter 56 in den Lichtleiter 54 geleitet und dann teilweise mit einer Intensität $I_2'$ in den Lichtleiter 50. Auch dieses Licht wird durch die Striche der Spur 42 moduliert. Diese Modulation wird als zweites Signal über den Lichtleiter 50 zu der Signalverarbeitungseinrichtung übertragen.

Es steht daher bei einem Defekt eines der Lichtleiter oder Ausfall einer Lichtquelle oder eines Detektors auf jeden Fall noch ein Signal zur Verfügung.

Fig.3 zeigt ebenfalls einen Lagesignalgeber, der die Stellung eines Steuerknüppels 64 abtastet und ein Lagesignal redundant liefert. Bei dieser Ausführung ist jedoch die Strichscheibe 66 lichtundurchlässig und auf beiden Seiten am Rand mit Spuren 68 von äquidistanten, reflektierenden Marken versehen. Die Strichscheibe 66 ist wieder durch den Steuerknüppel 64 um eine Achse 70 verdrehbar.

Auf der in Fig.3 vorderen Seite der Strichscheibe 66 ist ein Lichtleiter 72 angeordnet, der zu einer (nicht dargestellten) Lichtquelle geführt ist und ein Lichtbündel mit der Intensität $I_1$ leitet. Vor der Strichscheibe 66 ist weiterhin ein zweiter Lichtleiter 74 angeordnet. Die beiden Lichtleiter 72 und 74 sind über ein Y-Stück 76 mit einem gemeinsamen Lichtleiter 78 verbunden. Der Lichtleiter 78 ist bis dicht an die Strichscheibe geführt. Über den Lichtleiter 72, das Y-Stück 76 und den Lichtleiter 78 wird ein feiner Fleck auf der Strichscheibe 78 beleuchtet. Das von den Marken der in Fig.3 vorderen Spur 68 beim Durchgang durch diesen Fleck reflektierte Licht wird über den Lichtleiter 78 und das Y-Stück 76 in umgekehrter Richtung teilweise in den Lichtleiter 74 geleitet. Der Lichtleiter 74 ist zu einer (nicht dargestellten) Signalverarbeitungseinrichtung mit einem photoelektrischen Detektor geführt. Die Intensität des Lichtbündels in dem Lichtleiter 74 ist mit $I_1'$ bezeichnet.

Eine ebensolche Anordnung mit einem Lichtleiter 80 und einem Lichtleiter 82 ist in Fig.3 hinter der Strichscheibe 66 angeordnet. Die beiden Lichtleiter 80 und 82 sind über ein Y-Stück 84 mit einem Lichtleiter 86 verbunden, der bis dicht an die Rückseite der Strichscheibe 66 herangeführt ist. Der Lichtleiter 80 leitet ein Lichtbündel mit der Intensität $I_2$ von einer (nicht dargestellten) Lichtquelle zu der Strichscheibe 66. Das reflektierte Licht wird mit einer Intensität $I_2'$ über den Lichtleiter 82 zu einer Signalverarbeitungseinrichtung mit photoelektrischem Detektor geführt.

In den Figuren 2 und 3 ist jeweils nur die einfache Abtastung einer einzigen Spur dargestellt. Es können natürlich auf diese Weise auch mehrere Spuren abgetastet werden, um ein Richtungssignal und eine Referenzposition zu erhalten, wie das in Fig.1 dargestellt ist.

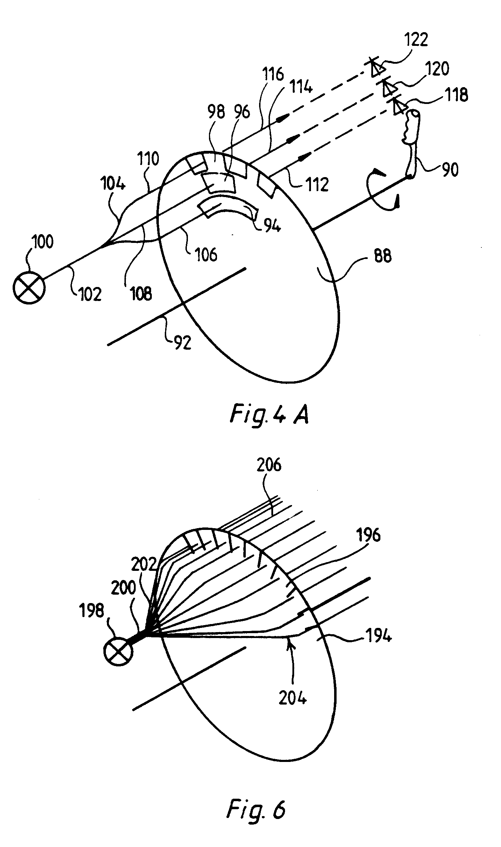

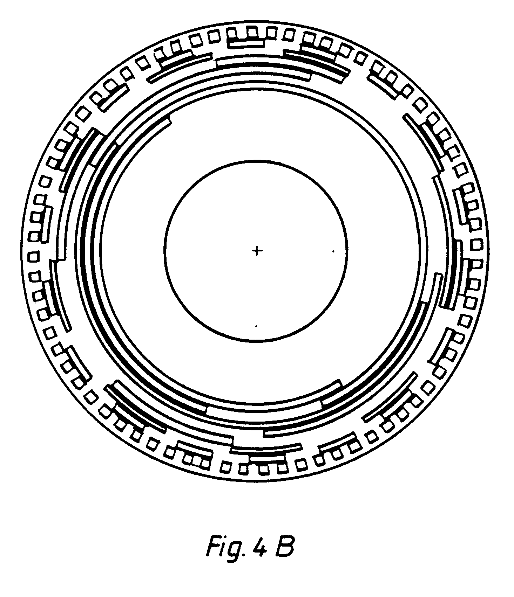

Fig.4A ist eine schematisch - perspektivische Darstellung und zeigt die Abtastung einer Codierscheibe 88 am Beispiel einer 3-Bit-Codierscheibe. Eine entsprechend abtastbare 8-Bit-Codierscheibe ist in Draufsicht in Fig. 4B dargestellt. Die Codierscheibe 88 ist wieder von einem Steuerknüppel 90 um eine Achse 92 verdrehbar. Die Codierscheibe 88 weist drei Spuren 94,96 und 98 auf, in denen ein Muster von durchsichtigen und undurchsichtigen Flächenteilen so angeordnet ist, daß durch die jeweils auf einem gemeinsamen Radius liegenden Flächenteile eine digitale Darstellung der Lage der Codierscheibe erhalten wird, wenn den verschiedenen Spuren 94,96,98 verschiedene Stellen einer Binärzahl und den durchsichtigen Flächenteilen der Wert "1" und den undurchsichtigen Flächenteilen der Wert "0" zugeordnet wird.Eine Lichtquelle 100 erzeugt ein Lichtbündel, das in einem Lichtleiter 102 geführt wird. Der Lichtleiter 102 teilt sich mittels eines Verteilerstücks 104 in drei Lichtleiter 106,108 und 110. Die Lichtleiter 106,108 und 110 sind bis dicht an die Codierscheibe 88 herangeführt und enden auf einem gemeinsamen Radius, bezogen auf die Achse 92, vor je einer der drei Spuren 94,96 bzw. 98. Fluchtend zu den Lichtleitern 106, 108 und 110 sind drei zugeordnete Lichtleiter 112, 114 bzw. 116 auf der in Fig.4 hinteren Seite der Codierscheibe 88 angeordnet, Die Lichtleiter 112, 114 und 116 sind zu je einem photoelektrischen Detektor 118,120 bzw. 122 geführt. Die Detektoren 118,120 und 122 erhalten Licht von der Lichtquelle 100 oder kein Licht, je nachdem, ob in der zugehörigen Spur 94, 96 bzw. 98 zwischen den Lichtleitern 106 und 112, den Lichtleitern 108 und 114 bzw. den Lichtleitern 110 und 116 ein durchsichtiger oder ein undurchsichtiger Flächenteil steht. Es wird dadurch die Stellung des Steuerknüppels unmittelbar ohne Umweg über eine Zählung in ein Digitalsignal umgesetzt.

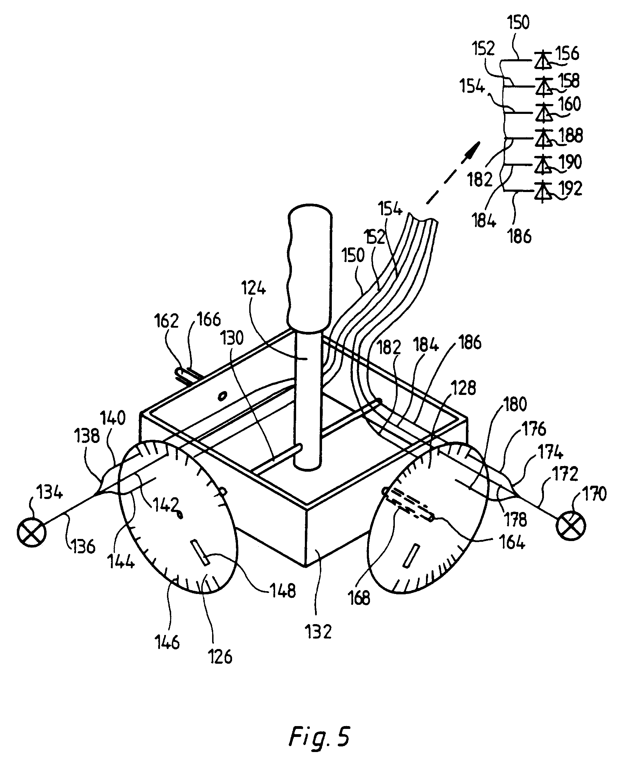

Fig.5 ist eine schematisch - perspektivische Darstellung und zeigt, wie durch den in zwei Richtungen beweglichen Steuerknüppel 124 zwei Strichscheiben 126 und 128 verdrehbar sind. Der Steuerknüppel 124 ist zu diesem Zweck kardanisch gelagert. Der Steuerknüppel 124 ist mit einer Welle 130 verbunden. Die Welle 130 ist in einem Rahmen 132 drehbar gelagert. Auf der Welle 130 sitzt die Strichscheibe 126. Die Strichscheibe 126 wird in der in Fig.1 dargestellten Weise abgetastet. Eine Lichtquelle 134 erzeugt ein Lichtbündel, das von einem Lichtleiter 136 zu der Strichscheibe 126 geführt wird. Durch ein Verteilerstück 138 ist der Lichtleiter 136 mit drei Lichtleitern 140, 142 und 144 verbunden. Die drei Lichtleiter 140, 142 und 144 sind an dem Rahmen 132 in nicht dargestellter Weise gehaltert und bis dicht an die Strichscheibe 126 herangeführt. Wie in Fig.1 dargestellt ist, sind zwei der Lichtleiter 140 und 142 um eine Viertelperiode winkelversetzt vor einer Spur 146 von Strichen angeordnet und dienen zur Erzeugung von Zähl- und Richtungsimpulsen, während der dritte Lichtleiter 144 radial einwärts davon sitzt und eine Referenzmarke zur Erzeugung eines Referenzimpulses beleuchtet. Fluchtend mit den drei Lichtleitern 140, 142 und 144 sind drei Lichtleiter 150,152 bzw. 154 auf der entgegengesetzten Seite der Strichscheibe 126 angeordnet, die zu Detektoren 156,158 bzw. 160 geführt sind.

Der Rahmen 132 ist mit Lagerzapfen 162 und 164 in gestellfesten Lagern 166 bzw. 168 gelagert. Auf dem Lagerzapfen 164 sitzt die Strichscheibe 128. Die Strichscheibe 128 wird in der gleichen Weise, wie das im Zusammenhang mit der Strichscheibe 126 beschrieben wurde, von einer Lichtquelle 170 über einen Lichtleiter 172, ein Verteilerstück 174 und drei Lichtleiter 176, 178 und 180 beleuchtet und über drei auf der entgegengesetzten Seite der Strichscheibe 128 angeordnete, mit den Lichtleitern 176, 178 und 180 fluchtende Lichtleiter 182, 184 bzw. 186 abgetastet. Die drei Lichtleiter 182, 184 und 186 sind zu je einem photoelektrischen Detektor 188, 190 bzw 192 geführt.

Fig.6 zeigt eine Anordnung, bei welcher nach Art eines Nonius Zwischenwerte der Lage einer Strichscheibe 194 gewonnen werden.

Die Strichscheibe 194 weist wieder eine Spur 196 von äquidistanten Strichen auf. Von einer Lichtquelle 198 geht ein Lichtbündel aus, das von einem Lichtleiter 200 zu der Strichscheibe geführt wird. Durch ein Verteilerstück 202 wird der Lichtleiter 200 mit neun Lichtleitern 204 verbunden. Die Lichtleiter 204 sind gegeneinander winkelversetzt vor der Spur 196 der Strichscheibe 194 angeordnet. Die Lichtleiter 204 sind äquidistant in solchen Abständen voneinander angeordnet, daß die neun Lichtleiter jeweils zehn Strichabständen der Spur 196 entsprechen. Dadurch kann zwischen den Strichabständen interpoliert werden, dadurch daß festgestellt wird, welcher der Lichtleiter 204 mit einem Strich der Spur 196 fluchtet. Fluchtend mit den Lichtleitern 204 sind neun Lichtleiter 206 auf der anderen Seite der Strichscheibe 194 angeordnet.

Es ist wichtig, daß die Breite der Striche und der Strichabstand an den lichtführenden Kerndurchmesser der Lichtleiter angepaßt ist. Ist der Kerndurchmesser des Lichtleiters zu groß im Vergleich zu den Strichen, werden jeweils gleichzeitig mehrere Striche beleuchtet und abgetastet. Ist der Kerndurchmesser zu klein, wird Lichtenergie verschenkt und damit das Signal verschlechtert. Die Scheibe, Strichscheibe oder Codierscheibe, sollte möglichst dünn sein, so daß die fluchtenden Lichtleiter mit ihren Stirnseiten dicht beieinander liegen und kein Lichtkegel erzeugt wird, der detektorseitig mehrere Lichtleiter überstrahlt. Aus dem gleichen Grunde sollten die Stirnflächen der Lichtleiter möglichst dicht an die Scheibe herangerückt werden. Das bedingt natürlich geringe Toleranzen in der Lagerung der Scheibe und in den Halterungen der Lichtleiter.

Die Signalübertragung über größere Entfernungen kann in bekannter Weise durch ein Multiplexverfahren, beispielsweise Wellenlängenmultiplex oder Zeitmultiplex, erfolgen.

**Patentansprüche**

1. Steuerknüppelanordnung zum Führen eines Luftfahrzeuges mit einem Steuerknüppel (124) der in zwei Richtungen auslenkbar ist, bei der

(a) der Steuerknüppel (124) mit einer Welle (130) verbunden ist, die in einem Rahmen (132) drehbar gelagert ist,

(b) der Rahmen (132) zur kardanischen Lagerung des Steuerknüppels seinerseits mit Lagerzapfen (162, 164) in gestellfesten Lagern (166, 168) gelagert ist,

(c) eine erste mit einer Codierung versehene, drehbare Scheibe (126) auf der Welle (130) sitzt,

(d) eine zweite mit einer Codierung versehene, drehbare Scheibe (128) auf einem der Lagerzapfen (164) sitzt,

(e) den Scheiben (126, 128) Mittel zum Abtasten der Codierungen zugeordnet sind,

**dadurch gekennzeichnet, dass**

(f) die Scheiben (126, 128) mit optisch abtastbaren Strichmustern oder Codierungen versehen sind,

(g) ein Lichtbündel von einer ersten Lichtquelle (134) von ersten Lichtzuleitermitteln (136, 140, 142, 144), die an dem Rahmen (132) gehalten sind, bis dicht an die erste Scheibe (126) herangeführt ist,

(h) erste Lichtableitermittel (150, 152, 154), die das durch das Strichmuster oder die Codierung der ersten Scheibe (126) beeinflusste Licht aufnehmen und zu Detektoren (156, 158, 160) führen,

(i) ein Lichtbündel, das von einer zweiten Lichtquelle (170) von zweiten Lichtzuleitermitteln (172, 176, 178, 180), die an dem Rahmen (132) gehalten sind bis dicht an die zweite Scheibe (128) herangeführt ist,

(k) zweite Lichtableitermittel (182, 184, 186) die das durch das Strichmuster oder die Codierung der zweiten Scheibe (128) beeinflusste Licht aufnehmen und zu Detektoren (188, 190, 192) führen,

(l) wobei die Lichtquellen (134 bzw. 170) und die Detektoren (156, 158, 160 bzw. 188, 190, 192) entfernt von den Scheiben (126 bzw. 128) und dem Rahmen (132) angeordnet sind.

2. Digitaler Lagesignalgeber nach Anspruch 1, **dadurch gekennzeichnet, daß** die Codierung der Scheibe (10) durch lichtundurchlässige und lichtdurchlässige Flächenteile gebildet ist.

3. Digitaler Lagesignalgeber nach Anspruch 1,- **dadurch gekennzeichnet, daß** die Codierung der Scheibe (66) durch reflektierende und nicht- reflektierende Flächenteile gebildet ist und die Lichtleiter (72,74) von der Lichtquelle und zu der Signalverarbeitungseinrichtung auf ein und derselben Seite der Scheibe (66) angeordnet sind.

4. Digitaler Lagesignalgeber nach einem oder mehreren der Ansprüche 1 bis 3, **dadurch gekennzeichnet, daß** zur Übertragung von optischen Signalen von dem Geberglied (10) zu der Signalverarbeitungseinrichtung eine Mehrzahl von gegeneinander versetzten Lichtleitern (28,30,38) vorgesehen ist.

5. Digitaler Lagesignalgeber nach Anspruch 4, **dadurch gekennzeichnet, daß** von einer Lichtquelle (18) über einen einzigen Lichtleiter (20) eine Mehrzahl von detektorseitigen Lichtleitern (28,30,38) beleuchtbar ist.

6. Digitaler Lagesignalgeber nach Anspruch 4 oder 5, **dadurch gekennzeichnet, daß** das Geberglied (194) eine gleichmäßige Teilung in einer durch die Lichtleiter (206) abgetasteten Spur (196) aufweist und die Lichtleiter (206) längs der Spur (196) nach Art eines Nonius versetzt angeordnet sind.

## Claims

1. Control column arrangement for directing an aircraft with a control column (124) arranged to be deflected in two directions, in which

   (a) the control column (124) is connected to a shaft (130) which is rotatably mounted in a gimbal (132),

   (b) the gimbal (132), for cardan mounting of the control column, is mounted, in turn with journals (162,164) in support-fixed bearings (166,168),

   (c) a first rotatable disc (126) provided with a coding is attached to the shaft (130),

   (d) a second rotatable disc (128) provided with a coding is attached to one of the journals (164),

   (e) means for scanning the codings are associated with the discs (126,128),

   **characterized in that**

   (f) the discs (126,128) are provided with optically detectable line patterns or codings,

   (g) a light beam is guided from a first light source (134) by first light feeding means (136,140,142,144) which are mounted at the gimbal (132), close to the first disc (126),

   (h) first light pick-up means (150,152,154) and receiving the light influenced by the line pattern or the coding of the first disc (126) and conducting it to detectors (156,158,160),

   (i) a light beam guided from a second light source (170) by second light feeding means (172,176,178,180) which are mounted at the gimbal (132), close to the second disc (128),

   (k) second light pick-up means (182,184,186) which receive the light influenced by the line pattern or the coding of the second disc (128) and conduct it to detectors (188,190,192),

   (l) the light sources (134 and 170, respectively) and the detectors (156,158,160 and 188,190,192, respectively) being spaced from the discs (126 and 128, respectively) and the gimbal (132).

2. Digital position signal transmitter as claimed in claim 1, **characterized in that** the coding of the disc (10) is formed by opaque and transparent surface portions.

3. Digital position signal transmitter as claimed in claim 1, **characterized in that** the coding of the disc (66) is formed by reflecting and non-reflecting surface portions and the light conductors (72,74) from the light source and to the signal processing device are arranged on one and the same side of the disc (66).

4. Digital position signal transmitter as claimed in one or several of claims 1 to 3, **characterized in that** a plurality of light conductors (28,30,38) offset to each other are provided for transmitting optical signals from the transmitter element (10) to the signal processing device.

5. Digital position signal transmitter as claimed in claim 4, **characterized in that** a light source (18) is arranged to illuminate a plurality of detector side light conductors (28,30,38) through a single light conductor (20).

6. Digital position signal transmitter as claimed in claim 4 or 5, **characterized in that** the tranmitter element (194) presents a regular division in a track (196) scanned by the light conductor (206), and the light conductors (206) are arranged along the track (196) in the way of a nonius.

## Revendications

1. Disposition de manche à balai destinée à diriger un aéronef avec une manche à balai (124) deviable dans deux directions, dans laquelle

   (a) la manche à balai (124) est reliée à un arbre (130) monté rotativement dans un châssis (132),

   (b) le châssis (132) est monté de son côté avec des pivots de palier (162,164) dans des paliers (166,168) fixes par rapport à la monture afin de monter le manche à balai à la cardan,

   (c) un premier disque rotatif (126) muni d'un codage est situé sur l'arbre,

   (d) un second disque rotatif (128) muni d'un codage est situé sur un pivot de palier (164),

   (e) des moyens destinés à explorer les codages sont associés aux disques (126,128),

   **caractérisée par le fait que**

   (f) les disques (126,128) sont munis de dessins à traits ou de codages optiquement explorables,

   (g) un faisceau lumineux est guidé d'une première source lumineuse (134) par des premiers moyens d'alimentation en lumière (136,140,142,144) tenus sur le châssis (132), jusqu'à être proche du premier disque (126),

   (h) des premiers moyens de décharge de lumière (150,152,154) recevant la

lumière influencée par le dessin à traits ou le codage du premier disque (126) et le conduisent à des détecteurs (156,158,160),

(i) un faisceau lumineux est guidé d'une seconde source lumineuse (170) par des seconds moyens d'alimentation en lumière (172,176,178,180) tenus sur le châssis (132), jusqu'à être proche du second disque (126),

(k) des seconds moyens de décharge de lumière (182,184,186) recevant la

lumière influencée par le dessin à traits ou le codage du sedcond disque (128) et le conduisent à des détecteurs (188,190,192),

(l) les sources lumineuses (134 resp. 170) et les détecteurs (156,158,160 resp. 188,190,192) étant disposés avec écartement disques (126 resp. 128) et du châssis (132).

2. Capteur de signal d'assiette digital selon la revendication 1, caractérisé par le fait que le codage du disque (10) est formé par des éléments de surface opaques et transparents.

3. Capteur de signal d'assiette digital selon la revendication 1, caractérisé par le fait que le codage (66) est formé par des éléments de surface réféchissants et non-réfléchissants, et les guides de lumière (72,74) de la source lumineuse vers le dispositif de traitement de signal sont disposés sur le même côté du disque (66).

4. Capteur de signal d'assiette digital selon l'une ou plusieurs des revendications 1 à 3, caractérisé par le fait que plusieurs guides de lumière (28,30,38) décalés l'un par rapport à l'autre sont prévus afin de transmettre des signaux optiques du membre de capteur (10) vers le dispositif de traitement de signal.

5. Capteur de signal d'assiette selon la revendication 4, caractérisé par le fait que plusieurs guides de lumière (28,30,38) sur le côté des détecteurs peuvent être illuminés par une source lumineuse (18) par un seul guide de lumière (20).

6. Capteur de signal d'assiette selon la revendication 4 ou 5, caractérisé par le fait que le membre de capteur (194) présente une division régulière dans une piste (196) explorée par les guides de lumière (206), et les guides de lumière (206) sont disposés le long de la piste (196) à la manière d'un vernier.

Fig.1

Fig.2

Fig.3

Fig. 4 A

Fig. 6

Fig. 4 B

EP 0 348 816 B1

Fig. 5

12